# FASCICULE DE BREVET EUROPEEN

(11) **EP 0 521 800 B1**
(45) Date de publication et mention de la délivrance du brevet: **08.03.1995**
(21) Numéro de dépôt: 92401930.0
(22) Date de dépôt: 03.07.1992
(51) Int. Cl.: F16L 37/00, A62B 9/04, F16L 37/42, F16L 37/133

(54) **Dispositif de raccordement rapide d'un circuit pneumatique sous pression sur un appareil**
Schnellverschlussvorrichtung eines unter Druck pneumatischen Umlaufes mit einem Gerät
Quick-acting coupling of a pneumatic circuit under pressure with a device

(30) Priorité: 05.07.1991 FR 9108426
(43) Date de publication de la demande: 07.01.1993
(73) Titulaire: GIAT Industries, F-78034 Versailles Cédex (FR)
(72) Inventeur: Rouby, Yvon, F-42500 La Chambon Feugerolles (FR)

(56) Documents cités:
- GB-A- 514 910
- GB-A- 2 069 083
- US-A- 2 448 688
- US-A- 3 486 730

## Description

La présente invention est relative à l'alimentation en fluide comprimé d'un appareil d'utilisation ou de consommation dudit fluide.

L'invention vise, plus spécifiquement, un dispositif de raccordement d'une arrivée d'air sous pression par rapport au milieu ambiant et destiné à assurer l'alimentation d'un appareil respiratoire, de préférence équipé d'une cartouche filtrante.

Plus spécifiquement, la présente invention concerne le domaine technique du raccordement d'entrée sur des appareils respiratoires filtrants à utilisation individuelle et destinés à être insérés dans un circuit d'assistance respiratoire, connus par exemple de US-A-2 448 688

Dans le domaine technique général ci-dessus, et plus particulièrement dans le domaine d'application préféré de l'invention, des propositions relativement nombreuses ont déjà été formulées par la technique antérieure. US-A-2 448 688 offre entre autre la possibilité de permettre une déconnexion rapide de l'appareil en cas de besoin, avec obturation du circuit d'alimentation après déconnexion par rapport à l'appareil.

Un objet de l'invention est de proposer un dispositif de raccordement rapide dont les différents éléments constitutifs peuvent être réalisés à un prix de revient intéressant par moulage, notamment par injection, en une matière plastique appropriée et qui peuvent ensuite être mutuellement assemblés, sans faire intervenir de moyens de fixation rapportés ou d'organes élastiques métalliques.

Un autre objet de l'invention est de permettre une réalisation par assemblage au moyen d'éléments constitutifs pouvant être réalisés tous en une même matière première pour conférer au dispositif de raccordement un caractère homogène.

Pour atteindre les objectifs ci-dessus, le dispositif de raccordement rapide conforme à l'invention est caractérisé en ce que :
- les moyens de connexion comprennent :
   . un collet d'appui et d'étanchéité contre l'embouchure de l'appareil,
   . et des mors expansibles élastiquement, séparés par des entailles axiales et formés par le corps concentriquement et intérieurement au collet au-delà duquel ils s'étendent,
- et les moyens de verrouillage comprennent :
   . un poussoir mâle, du type tubulaire, apte à coulisser axialement dans le corps pour occuper une première position stable dans laquelle il ferme la section de passage du corps et libère les mors et une seconde position stable dans laquelle il ouvre la section de passage du corps et commande les mors en expansion radiale à l'intérieur de l'embouchure de l'appareil,
   . et une bague de commande extérieure au corps et liée axialement au poussoir mâle.

Une variante de l'invention permet un réglage du débit d'alimentation.

Diverses autres caractéristiques ressortent de la description faite ci-dessous en référence aux dessins annexés qui montrent, à titre d'exemple non limitatif, une forme de réalisation de l'objet de l'invention.

La **fig. 1** est une coupe-élévation du dispositif de raccordement rapide dans un état de déconnexion.

La **fig. 2** est une coupe-élévation prise selon la ligne **II-II** de la **fig. 3** et correspondant à l'un des éléments constitutifs du dispositif.

La **fig. 3** est une coupe transversale prise selon le plan **III-III** de la **fig. 2.**

La **fig. 4** est une coupe-élévation d'un autre élément constitutif du dispositif.

La **fig. 5** est une coupe transversale prise selon la ligne **V-V** de la **fig. 4.**

La **fig. 6** est une vue en plan prise selon la ligne **VI-VI** de la **fig. 7** et illustrant un autre élément constitutif.

La **fig. 7** est une coupe-élévation prise selon la ligne brisée **VII-VII** de la **fig. 6.**

La **fig. 8** est une coupe-élévation d'un quatrième élément constitutif du dispositif.

La **fig. 9** est une coupe transversale prise selon la ligne **IX-IX** de la **fig. 8.**

La **fig. 10** est une coupe-élévation, analogue à la **fig. 1,** mais illustrant le dispositif de raccordement rapide dans un état de connexion avec l'appareil d'utilisation ou de consommation.

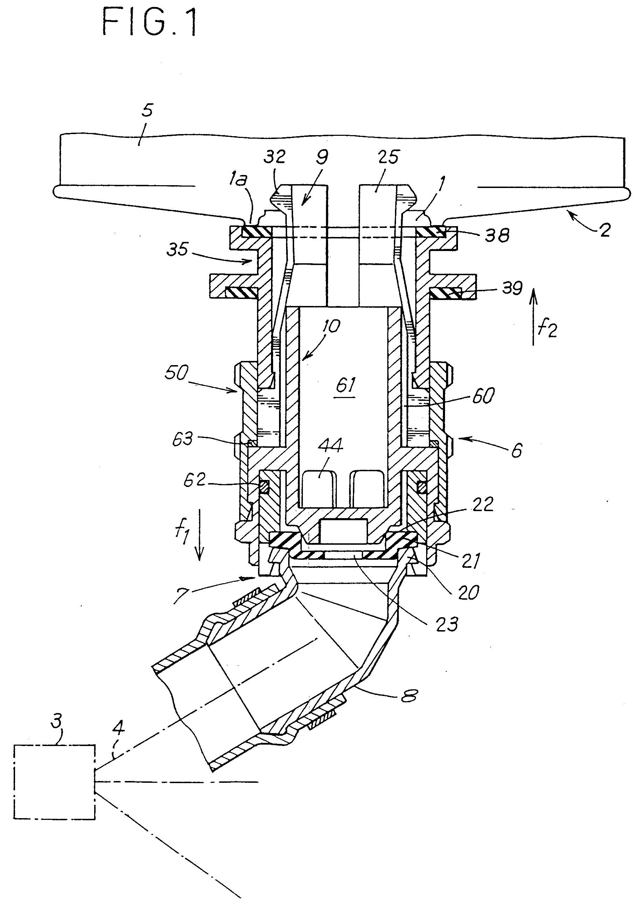

La **fig. 1** montre l'embouchure **1** de connexion d'un appareil **2** d'utilisation ou de consommation d'un fluide comprimé pneumatique fourni, sous pression relative, par une installation **3,** plus particulièrement chargée d'alimenter plusieurs lignes **4** à caractère individuel ou collectif. L'installation **3** est, de préférence, du type à même de fournir un fluide comprimé, tel que de l'air, en tant qu'assistance respiratoire à un appareil **2**, du type masque à gaz ou analogue, dont l'embouchure **1** correspond à l'entrée d'une cartouche filtrante **5** adaptée sur le couvre-face de l'appareil **2**, généralement de façon amovible.

L'appareil **2** et l'installation **3** doivent être considérés comme bien connus de l'homme de l'art et ne sont, pour cette raison, pas autrement décrits plus en détail dans ce qui suit.

Le dispositif de raccordement rapide selon l'invention, désigné par la référence globale **6**, est destiné à permettre la connexion et la déconnexion rapides entre une ligne **4** et l'embouchure **1** d'un appareil **2**.

Le dispositif **6** comprend, à cet effet, un corps tubulaire **7**, d'axe **x-x'**, pourvu, à l'une des extrémités dite basse dans ce qui suit, d'un embout **8** don raccordement avec la ligne **4**. Le corps **7** comporte, à l'autre extrémité, des moyens **9** de connexion avec l'embouchure **1** et des moyens **10** de verrouillage desdits moyens de connexion.

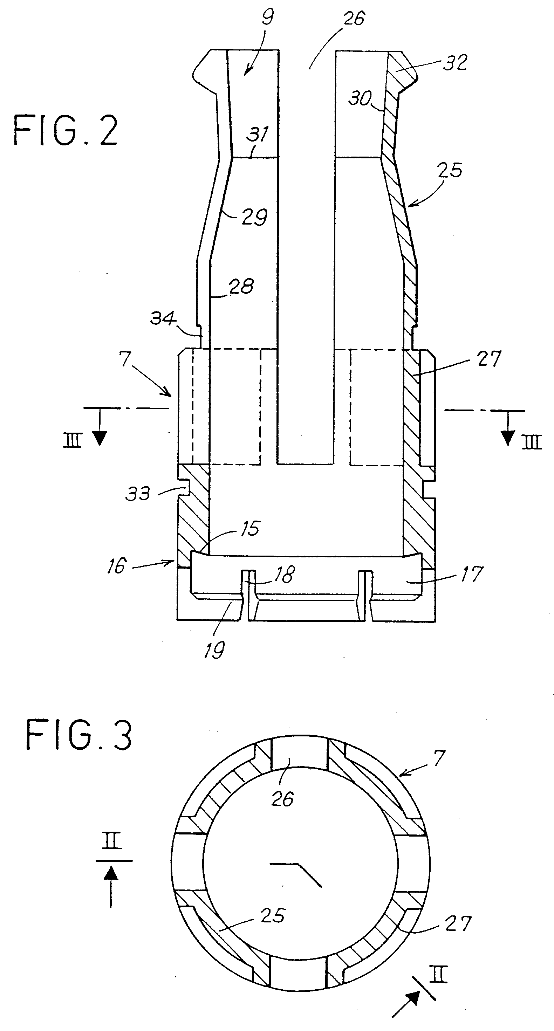

Le corps **7**, illustré plus en détail aux **fig. 2** et **3**, est du type tubulaire, de forme générale cylindrique, définissant intérieurement un rebord périphérique **15** à partir duquel s'étend une base tubulaire **16** définie par une enveloppe annulaire composée de griffes **17** séparées par des fentes **18** et pourvues chacune d'un épaulement intérieur **19**. La base **16** représente une enveloppe d'encliquetage pour le montage de l'embout **8** qui est, de préférence mais non exclusivement, constitué par un segment tubulaire coudé possédant, à une extrémité, une collerette **20** à même d'être emboîtée par encliquetage dans l'enveloppe **16** derrière les épaulements **19** des griffes **17**.

Le montage par encliquetage de la collerette **20** est effectué en interposant, entre cette dernière et le rebord **15**, un joint d'étanchéité **21** offrant, à l'intérieur du corps **7**, un siège d'appui **22** et délimitant un diaphragme **23** déterminant la section de passage interne du corps tubulaire **7**. La garniture **21** est, de préférence, réalisée en une matière déformable élastiquement mais à caractère relativement compact.

Le corps tubulaire **7** est pourvu, à l'opposé de la base **16**, des moyens de verrouillage **9** qui sont constitués par des mors **25** expansibles radialement de façon élastique, à partir d'une position stable de repos dans laquelle ils délimitent en bout une section transversale qui est légèrement inférieure à celle de l'embouchure **1**. Les mors **25** sont séparés par des entailles axiales **26** qui s'étendent sur toute la longueur des mors jusque, sensiblement, au niveau du pied **27** de chacun d'eux.

Les mors **25** définissent, à partir des pieds **27**, une enveloppe **28** de forme cylindrique, prolongée par une enveloppe intermédiaire **29** à caractère tronconique, dont la petite base est dirigée à l'opposé des griffes **17**. L'enveloppe tronconique intermédiaire est prolongée par une enveloppe terminale **30**, elle-même tronconique, mais de conicité inverse ou opposée et qui se trouve raccordée, par sa petite base, à celle de l'enveloppe **29** par une arête **31** périphérique intérieure.

L'enveloppe tronconique **30** peut être qualifiée de surface interne en dépouille par rapport à l'extrémité terminale des mors **25** qui comportent chacun, extérieurement, un épaulement **32** délimité par deux rampes inclinées.

Les mors **25** sont représentés au nombre de quatre, de même étendue angulaire et équidistants. Une disposition différente pourrait aussi être retenue sans sortir de l'invention.

Le corps tubulaire **7** présente, par ailleurs, dans sa paroi périphérique extérieure, entre la base **16** et les pieds **27**, une gorge annulaire **33** périphérique et, au-delà des pieds **27** et dans la surface extérieure de chacun des mors **25**, une rainure **34** dont la fonction apparaît dans ce qui suit.

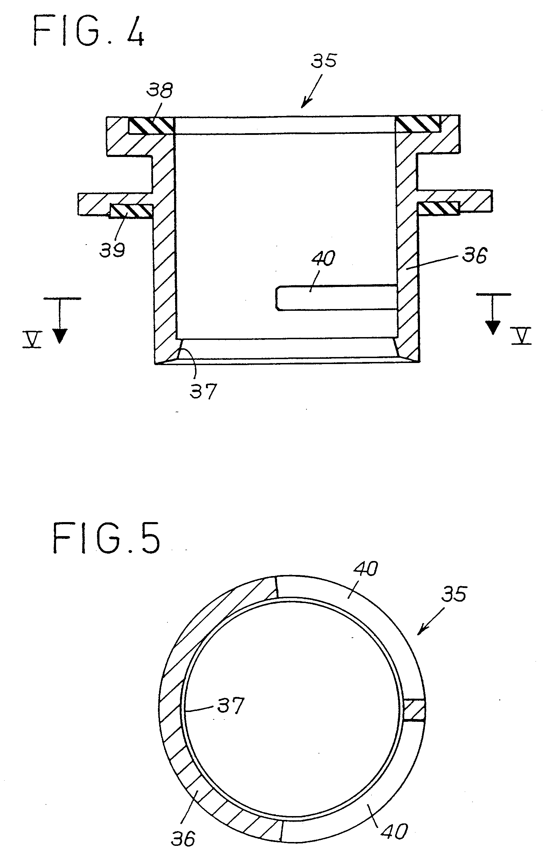

Les moyens **9** comprennent, par ailleurs, selon l'invention, un collet d'appui et d'étanchéité **35**, de forme tubulaire cylindrique, destiné à coopérer avec l'embouchure **1**. Le collet **35** est constitué, comme illustré par les **fig. 4** et **5**, par une virole cylindrique **36** dont le diamètre intérieur est égal, au jeu près, à celui extérieur de l'enveloppe cylindrique **28**. La virole **36** est pourvue, à une extrémité, d'un rebord **37** d'encliquetage destiné à coopérer avec les rainures **34** des différents mors **25**. La virole **36** peut ainsi être adaptée sur le corps **1**, par simple emboîtement axial, jusqu'à pénétration à force du rebord **37** dans les rainures **34**, de manière que la virole **36** s'étende dans le prolongement du corps en présentant une paroi périphérique extérieure s' inscrivant dans le prolongement de celle de ce dernier. Comme cela ressort de la **fig. 1**, après mise en place, la virole **36** s'étend concentriquement, à l'extérieur et à distance de l'enveloppe que définissent les différents mors **25**. La longueur axiale de la virole **36** est déterminée pour que le collet extrême **35** qu'elle forme soit situé en dessous de la partie terminale des mors **25** et, notamment, de l'épaulement périphérique **32** que ces derniers forment.

Le collet **35** est réalisé pour définir deux portées opposées qui sont pourvues de deux garnitures d'étanchéité **38** et **39** dont les fonctions apparaissent dans ce qui suit. La virole **36** est réalisée pour comporter au moins une lumière **40** ménagée, par exemple, sur une amplitude angulaire voisine de 90°. De préférence, la virole **36** comporte, comme illustré par la **fig. 5**, deux lumières **40** qui sont ménagées pour intéresser sensiblement la demi-périphérie de la virole.

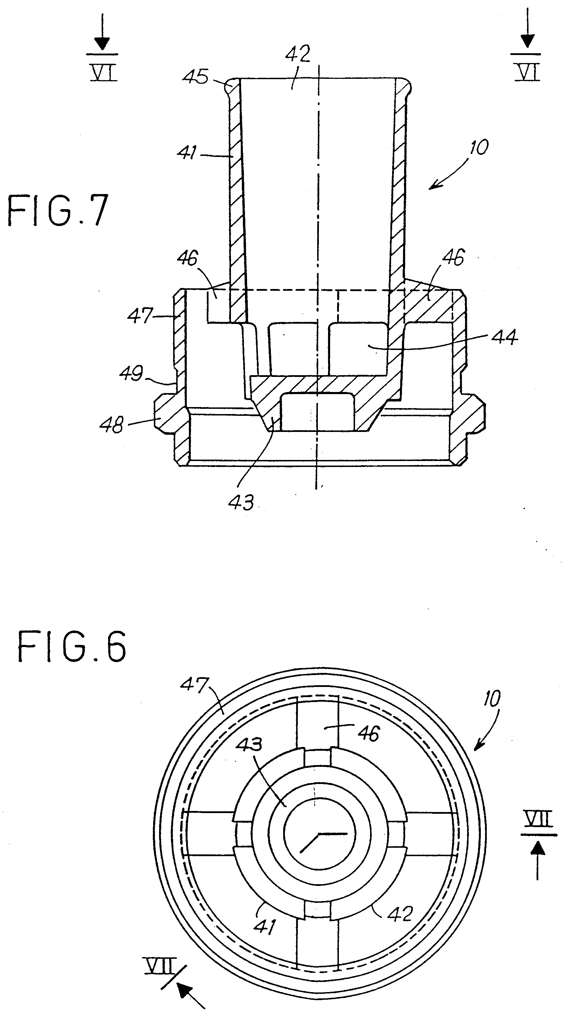

Comme indiqué précédemment, le dispositif de l'invention comprend, également, les moyens de verrouillage **10** qui sont plus précisément illustrés par les **fig. 6** et **7**. De tels moyens comprennent un poussoir mâle, formant une pièce tubulaire **41** de forme générale cylindrique possédant une extrémité ouverte **42**, dite supérieure, et une extrémité fermée **43**, dite inférieure, dénommée dans ce qui suit "obturateur" et présentant une portée tronconique.

La pièce tubulaire **41** présente un diamètre extérieur inférieur au diamètre interne du corps tubulaire **7** et possède, dans sa paroi périphérique et immédiatement au-dessus de l'obturateur **43**, des lumières **44**, dites d'intercommunication. L'extrémité ouverte supérieure est pourvue d'un bourrelet **45** extérieur, destiné à coopérer avec l'enveloppe tronconique intermédiaire **29** définie par les mors **25**. Le pièce tubulaire **41** comporte, dans un plan transversal situé au-delà des lumières **44** par rapport à l'obturateur **43**, des extensions radiales extérieures **46** dont la largeur correspond sensiblement, au jeu près, à celle des entailles **26**. Les extensions radiales **46** sont prévues en un même nombre et selon une même répartition angulaire que les entailles **26**. Les extensions **46** portent une jupe périphérique **47**, de forme générale cylindrique, s'étendant concentriquement à la partie de la pièce **41** définissant les lumières **44** et l'obturateur **43** et présentant un diamètre intérieur égal, au jeu près, à celui du corps **7**. La jupe **47** est pourvue, entre les extensions radiales **46** et une moulure **48** crantée ou moletée, d'une gorge périphérique **49** dont la fonction apparaît dans ce qui suit.

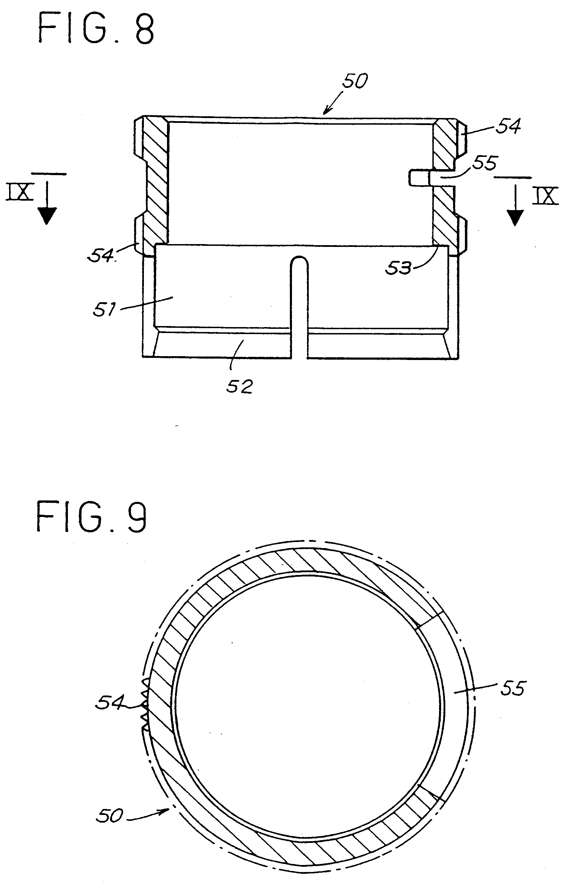

Le poussoir mâle est complété par une bague de commande **50** illustrée plus en détail aux **fig. 8** et **9**. La bague **50**, de forme générale cylindrique, présente un diamètre intérieur correspondant, au jeu près, au diamètre extérieur du corps **7** et de la virole **36** et se trouve prolongée, à partir de sa base, par des griffes **51** pourvues d'un épaulement interne **52** destiné à permettre un montage par encliquetage dans la gorge **49**. Les griffes **51** s'étendent à partir d'un rebord annulaire **53** dont la fonction apparaît dans ce qui suit.

La bague de commande **50** comporte, dans sa paroi périphérique et, par exemple, entre deux moulures **54** crantées ou moletées, une lumière **55** dont la fonction apparaît dans ce qui suit.

Les différents éléments constitutifs décrits ci-dessus sont mutuellement assemblés de la façon suivante pour constituer le dispositif de raccordement rapide.

La garniture **21** est emboîtée dans la base **16** de manière à être appliquée en appui contre le rebord **15** contre lequel elle est comprimée par l'emboîtement, par déformation élastique et encliquetage, de la collerette **20** de l'embout de raccordement **8**.

Dans certains cas, des moyens peuvent être prévus pour autoriser, supplémentairement, une rotation de l'embout **8** sur l'axe longitudinal **x-x'** du corps tubulaire **7**.

Par l'extrémité opposée à la base **16**, le poussoir mâle est ensuite engagé, par la jupe **47**, sur les mors **25**, de telle façon que les extensions radiales **46** soient emboîtées dans les entailles **26**. L'emboîtement est effectué jusqu'à amener les extensions radiales **46** contre le fond des entailles **26**, de façon que la pièce tubulaire **41** soit disposée à l'intérieur de l'enveloppe **28** dans laquelle elle délimite une chambre annulaire **60** par rapport au corps **7** et un passage axial **61**.

Le montage du poussoir mâle est effectué après mise en place préalable d'une garniture d'étanchéité **61**, telle qu'un joint torique, dans la gorge **33**. La jupe **47** est ainsi amenée à coopérer avec le joint **62**, tout en étant à même de coulisser axialement sur le corps **7**.

Les moyens **10** sont ensuite complétés par la mise en place de la bague de commande **50** sur le corps **7**, pour que les griffes **51** emboîtent la jupe **47** et viennent s'encliqueter, par les épaulements **52**, dans la gorge **49** en appui contre la moulure **48**. Le montage de la bague de commande **50** est effectué avec interposition d'une garniture d'étanchéité **63** qui est serrée entre le rebord **53** et le bord annulaire correspondant de la jupe **47**.

Le montage de la bague de commande **50** confère, à cette dernière, une liaison axiale avec le poussoir mâle par rapport auquel elle peut, toutefois, tourner librement sur l'axe **x-x'**.

Le montage du dispositif est ensuite complété par la mise en place du collet **35** qui est emboîté, par sa virole **36**, sur la partie terminale des mors **25**, de manière à être inséré entre la base ou les pieds de ces derniers et la bague de commande **50**, de façon à être lié par encliquetage du rebord **37** dans les rainures **34**.

Dans cette position, comme dit précédemment, le plan transversal que définit la garniture d'étanchéité **38** du collet **35** s'étend dans un plan inférieur à celui de l'épaulement périphérique extérieur **32**.

Le dispositif de raccordement rapide ainsi obtenu fonctionne de la façon suivante.

En référence à l'état selon la **fig. 1**, le poussoir mâle des moyens **10** a été commandé par la bague **50** en coulissement dans le sens de la flèche **f₁**, relativement au corps **7** et au collet **35** pour amener les extensions radiales **46** en butée contre le fond des entailles **26**. Dans cette position, le bourrelet **45** de la pièce tubulaire **41** coopère juste avec l'enveloppe tronconique **29** des mors **25** qui sont maintenus dans leur position initiale de rétraction dans laquelle l'épaulement périphérique externe **32** qu'ils définissent présente un diamètre hors-tout inférieur à celui de l'embouchure **1**.

Dans cet état, l'obturateur **43** de la pièce tubulaire **41** coopère avec le siège **22** de la garniture **21** et ferme la section de passage **23** entre le collet de raccordement **8** et la chambre annulaire **60**.

Le dispositif de raccordement se trouve placé dans un état d'obturation et ferme la ligne **4** qui se trouve momentanément dans un état de non utilisation par défaut de raccordement avec un appareil **2**.

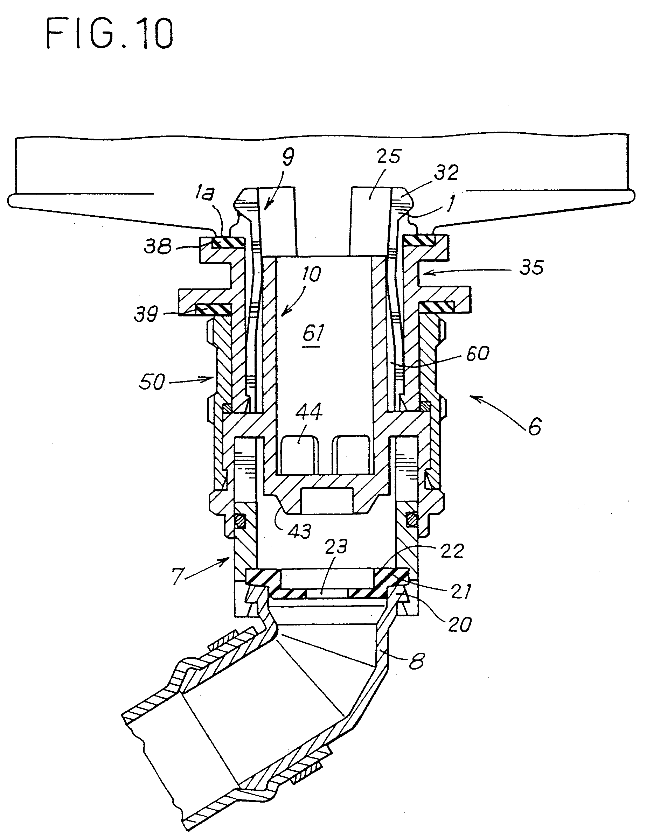

Lorsqu'il convient de raccorder l'appareil **2** à la ligne **4**, il suffit, à partir de l'état selon la **fig. 1**, d'engager la partie terminale des mors **25** dans l'embouchure **1** jusqu'à amener la garniture **38** du collet **35** en appui étanche contre un plan périphérique de contact **1a** présenté par l'embouchure **1**. Après pénétration relative complète, la bague de commande **50** est déplacée dans le sens de la flèche **f₂** (**fig. 10**) pour faire coulisser le poussoir mâle dans le sens correspondant par rapport au corps **7**.

Par une telle action, le bourrelet **45** est amené à coopérer progressivement avec l'enveloppe tronconique **29** et à commander l'expansion radiale par déformation élastique des mors **25** à partir de leurs pieds **27**. L'épaulement **32** est ainsi expansé radialement derrière l'embouchure **1** pour être verrouillé dans une telle position d'expansion radiale dès que le bourrelet **45** a franchi l'arête **31** pour s'engager dans l'enveloppe terminale en dépouille **30**. Le franchissement de l'arête **31** définit une perception tactile du passage du point de verrouillage et avertit l'utilisateur, le monteur ou l'adaptateur, de l'établissement d'une connexion correcte entre le dispositif et l'appareil **2**. Dans cette position, le dispositif établit une liaison mécanique résistante, par l'intermédiaire de l'épaulement **32**, et étanche, par la coopération entre la garniture **38** et le rebord **1a** de l'embouchure **1**.

Le déplacement, dans le sens de la flèche **f₂**, est effectué, par ailleurs, de façon autrement sensitive également jusque dans une position de butée qui est déterminée par l'amenée en appui de la bague de commande **50** contre la garniture d'étanchéité inférieure **39** du collet **35**, tel que cela résulte de la **fig. 10**.

Dans cet état, tel que cela ressort des dessins, le dispositif de raccordement définit une enveloppe périphérique continue, étanche, par l'intermédiaire du collet **35**, de la virole **36**, de la bague de commande **50**, de la jupe **47** et du corps tubulaire **7**.

Dans la position de connexion en butée, telle qu'illustrée par la **fig. 10**, l'obturateur **43** se trouve éloigné de la portée **22**, de sorte que la chambre annulaire **60** est en communication, par la section diaphragmée **23**, avec l'embout de raccordement **8**. Du fluide comprimé, fourni par l'installation **3**, peut ainsi traverser l'embout **8**, la section **23**, pénétrer dans la chambre annulaire **60**, emprunter les lumières d'intercommunication **44** et suivre le passage axial **61** pour être délivré à l'appareil **2**, par l'intermédiaire, dans le cas présent, de la cartouche filtrante **5**.

Dans le cas où il est souhaité modifier le débit de fluide comprimé fourni par l'installation **3**, l'utilisateur peut soumettre la bague de commande **50** à une rotation sur l'axe **x-x'**, de manière à découvrir plus ou moins, par l'intermédiaire de la lumière **55**, l'une et l'autre des lumières **40** de la virole **36**.

Etant donné que le fluide comprimé est délivré sous une pression relative supérieure à celle du milieu ambiant, notamment dans une installation d'assistance respiratoire, une partie ou fraction du fluide délivré peut ainsi s'échapper dans le milieu ambiant pour réduire le débit fourni à l'appareil d'utilisation ou de consommation **2**.

Les moyens de connexion **10** décrits ci-dessus sont, par ailleurs, conçus pour autoriser une déconnexion automatique dès lors qu'un effort de traction est appliqué relativement entre l'appareil **2** et l'embout **8**. En effet, dans un tel cas, la présence des rampes inclinées, constitutives de l'épaulement **32**, soumet les mors **25** à une flexion de rétraction radiale qui autorise une déconnexion automatique assurant une séparation physique entre l'appareil **2** et la ligne **4**.

Ainsi que cela ressort de ce qui précède, le dispositif de raccordement rapide conforme à l'invention représente un raccord léger pouvant être réalisé dans les meilleures conditions par moulage par injection d'une matière plastique choisie pour répondre aux conditions d'utilisation extérieures et intérieures. En outre, le dispositif de raccordement est constitué, par simple montage d'éléments constitutifs ne faisant intervenir ni organes de fixation indépendants, ni joncs d'arrêt à caractère métallique, qui seraient susceptibles de détériorations ou de dysfonctionnements éventuels.

En outre, la possibilité de réaliser les éléments constitutifs à partir d'une matière plastique injectée sous pression permet de disposer d'un dispositif léger, résistant, fiable dans le temps et à caractère inaltérable, dont le montage peut être obtenu par simple assemblage et encliquetage de ses différents éléments constitutifs.

Par ailleurs, un tel dispositif fournit à l'utilisateur ou au consommateur une possibilité du réglage du débit d'alimentation par adaptation d'un débit de fuite réglable au moyen d'une seule intervention sur l'un des éléments constitutifs par rotation relative.

En outre, la déconnexion volontaire du dispositif par rapport à l'appareil **2** s'effectue en agissant de façon positive sur la bague de commande **50** effaçant le bourrelet extrême **45** de la pièce tubulaire **41** pour autoriser la rétraction élastique des mors **25**. Au cours d'une telle action, l'obturateur **43** est automatiquement ramené en position de fermeture de la section diaphragmée **23** par coopération avec la portée **22**, de manière à obturer la ligne **4** et éviter une consommation inutile du fluide délivré par l'installation **3**, notamment en cas d'assistance respiratoire collective pour un local, un appareil ou un engin mobile.

## Revendications

1. Dispositif de raccordement rapide d'un circuit pneumatique (**4**) sous pression relative, sur un appareil d'utilisation ou de consommation (**2**), du type comprenant un corps tubulaire (**7**), un embout (**8**) de raccordement au circuit monté à l'une des extrémités du corps, des moyens (**9**) de connexion rapide à l'appareil prévus à l'autre extrémité du corps et des moyens (**10**) de verrouillage desdits moyens de connexion,
caractérisé en ce que :
- les moyens de connexion (**9**) comprennent :
. un collet (**35**) d'appui et d'étanchéité contre l'embouchure (**1**) de l'appareil (**2**),
. et des mors (**25**) expansibles élastiquement, séparés par des entailles axiales (**26**) et formés par le corps concentriquement et intérieurement au collet au-delà duquel ils s'étendent,
- et les moyens de verrouillage (**10**) comprennent :
. un poussoir mâle (**41**), du type tubulaire, apte à coulisser axialement dans le corps pour occuper une première position stable dans laquelle il ferme la section de passage (**23**) du corps et libère les mors et une seconde position stable dans laquelle il ouvre la section de passage du corps et commande les mors en expansion radiale à l'intérieur de l'embouchure de l'appareil,
. et une bague (**50**) de commande extérieure au corps et liée axialement au poussoir mâle.

2. Dispositif de raccordement rapide selon la revendication 1, caractérisé en ce que la bague de commande (**50**) assume, supplémentairement, une fonction d'organe tournant de réglage du débit de fluide pneumatique, par contrôle de la section de passage d'une lumière de fuite (**40**) ménagée dans le corps.

3. Dispositif de raccordement rapide selon la revendication 1 ou 2, caractérisé en ce que le collet d'appui (**35**) définit deux portées munies de deux garnitures d'étanchéité opposées (**38**, **39**), l'une étant destinée à l'appui contre l'embouchure (**1**) de l'appareil (**2**) et l'autre étant réservée à la coopération avec la bague de commande (**50**) dans la position dans laquelle le poussoir mâle (**41**) ouvre la section de passage (**23**) du corps et verrouille les mors (**25**).

4. Dispositif de raccordement rapide selon la revendication 1 ou 3, caractérisé en ce que le collet d'appui (**35**) est formé par une virole (**36**) encliquetée sur le corps sensiblement à la base des mors (**25**) et comportant une paroi périphérique extérieure s'inscrivant dans le prolongement de celle du corps.

5. Dispositif de raccordement rapide selon la revendication 1, caractérisé en ce que les mors (**25**) expansibles élastiquement définissent une enveloppe terminale (**30**) pourvue d'un épaulement périphérique externe (**32**), de diamètre inférieur à celui interne du collet (**35**) et qui est reliée au corps par une enveloppe intermédiaire (**29**) définissant intérieurement une enveloppe tronconique dont la petite base présente un diamètre inférieur à celui extérieur du poussoir mâle.

6. Dispositif de raccordement rapide selon la revendication 5, caractérisé en ce que le poussoir mâle (**41**), de type tubulaire, comporte une extrémité ouverte (**45**) de coopération avec l'enveloppe tronconique (**29**, **30**) des mors, une extrémité fermée par un obturateur (**43**) de la section de passage du corps, un diamètre extérieur inférieur à celui interne du corps dans lequel il délimite une chambre annulaire (**60**) et un passage axial (**61**) et des lumières (**44**) d'intercommunication entre la chambre et le passage.

7. Dispositif de raccordement rapide selon la revendication 1, 5 ou 6, caractérisé en ce que le poussoir mâle (**41**) est pourvu, extérieurement, d'extensions radiales (**46**) engagées dans les entailles (**26**) des mors et portant une jupe cylindrique (**47**) coulissant, extérieurement et avec étanchéité, sur la base (**16**) du corps (**7**).

8. Dispositif de raccordement rapide selon l'une des revendications 1, 5, 6 ou 7, caractérisé en ce que le poussoir mâle (**41**) comporte, à une extrémité, un obturateur (**43**) définissant une portée tronconique apte à coopérer avec une garniture diaphragme (**21**) maintenue entre la base (**16**) du corps et l'embout (**8**) qui est monté par encliquetage dans le corps.

9. Dispositif selon la revendication 1, 2 ou 7, caractérisé en ce que la bague de commande (**50**) est montée par encliquetage sur la jupe (**36**) pour être liée axialement, mais libre de tourner avec étanchéité.

10. Dispositif de raccordement rapide selon la revendication 1, 5, 6, 7 ou 8, caractérisé en ce que le poussoir mâle (**41**) comporte en bout un bourrelet périphérique extérieur (**45**) et en ce que l'enveloppe terminale (**30**), définie par les mors (**25**), est de forme légèrement tronconique en dépouille opposée à celle de la partie intermédiaire à la petite base de laquelle elle se raccorde par une arête (**31**).

## Claims

1. A device for the rapid connection of a pneumatic circuit (4) under relative pressure to a user or consumer machine (2), of a type which consists of a tubular body (7), a mouthpiece (8) for connection to the circuit mounted at one of the ends of the body, mechanisms (9) for rapid connection to the machine attached to the other end of the body, and mechanisms (10) for locking the said connection mechanisms, characterised by the fact that :
- the connection mechanisms (9), comprise :
. a pressure and sealing collet (35) bearing on the mouth (1) to the machine (2),
. elastically expanding jaws (25), separated by axial grooves (26), and formed by the body, concentrically and internally to the collet, beyond which they extend.
- the locking mechanisms (10), comprise :
. a male thruster (41) of the tubular type, able to slide axially in the body to take up an initial stable position in which it closes the passage section (23) of the body and releases the jaws, and a second stable position in which it opens the section of passage of the body and controls the jaws in radial expansion inside the mouth of the machine,
. a control ring (50) outside the body and connected axially to the male thruster.

2. The rapid connection mechanism described in claim 1 above, in which the control ring (50) has the additional function of a rotating device for adjustment of the flow of pneumatic fluid, by controlling the opening section of a leakage aperture (40) cut in the body.

3. A rapid connection device as described in claim 1 or 2, in which the bearing collet (35) defines two projections fitted with two opposed sealing gaskets (38 and 39), one designed to bear against the mouth (1) of the machine (2), and the other intended to mate with the control ring (50) in the position in which the male thruster (41) opens the passage section (23) of the body and locks the jaws (25).

4. A rapid connection device as described in claim 1 or 3, in which the bearing collet (35) is formed by a ferrule (36) locked onto the body approximately at the base of the jaws (25), and having a peripheral external wall fitting onto the extension of that of the body.

5. A rapid connection device as described in claim 1, in which the elastically expandable jaws (25) determine a terminal envelope (30) with a peripheral external shoulder (32), the diameter of which is less than the internal diameter of the collet (35), and which is attached to the body by an intermediate envelope (29), internally determining a truncated-cone envelope, the small base of which has a diameter which is less than the external diameter of the male thruster.

6. A rapid connection device as described in claim 5, in which the male thruster (41), of tubular shape, has one open end (45) which mates with the truncated-cone envelope (29 and 30) of the jaws, and one end closed by a stopper (43) for the passage section of the body, with an external diameter which is less than the internal diameter of the body, in which it delimits an annular chamber (60), an axial passage (61), and intercommunicating apertures (44) between the chamber and the passage.

7. A rapid connection device as described in claim 1, 5 or 6, in which the male thruster (41) has external radial extensions (46) engaged in the grooves (26) of the jaws, and with a cylindrical skirt (47) sliding outside the base (16) of the body (7) in a sealed manner.

8. A rapid connection device as described in claim 1, 5, 6 or 7, in which the male thruster (41) has, at one end, a stopper (43) determining a truncated-cone projection which can mate with a diaphragm gasket (21) held between the base (16) of the body and the mouth-piece (8) which is mounted by locking into the body.

9. A rapid connection device as described in claim 1, 2 or 7, in which the control ring (50) is mounted by locking onto the skirt (36) for axial connection, but remaining free to turn in a sealed manner.

10. A rapid connection device as described in claim 1, 5, 6,7 or 8, in which the thruster (41) has at its end an external peripheral flange (45), and a terminal envelope (30) determined by the jaws (25), of slightly truncated-cone shape with a taper opposite to that of the intermediate part of the small base to which it is attached by a ridge (31).

## Patentansprüche

1. Schnellanschlußvorrichtung eines unter relativem Druck stehenden Druckluftkreises (4) an ein Verwendungs- oder Verbrauchsgerät (2) mit einem rohrförmigen Körper (7), einem Anschlußstutzen (8) an den Kreis, der an einem Ende des Körpers angeordnet ist, Schnellanschlußmitteln des Geräts am anderen Ende des Körpers und Verriegelungsmitteln (10) der besagten Anschlußmittel, dadurch gekennzeichnet, daß:
- die Anschlußmittel (9)
. einen Stütz- und Dichtungskragen (35) gegen die Mündung (1) des Geräts (2),
. und federnd ausdehnbare Backen (25) umfassen, die mittels axialer Schlitze (26) getrennt und mittels des Körpers konzentrisch innerhalb des Kragens ausgebildet sind, über den hinaus sie sich erstrecken,
- und die Verriegelungsmittel (10)
. einen rohrartigen Stößel (41) umfassen, der in axialer Richtung im Körper verschoben werden kann, um eine erste feste Position einzunehmen, in der er den Strömungsquerschnitt (23) des Körpers schließt und die Backen freisetzt, und eine zweite feste Position, in der er den Strömungsquerschnitt des Körpers öffnet und die Backen in radialer Dehnung innerhalb der Mündung des Geräts steuert,
. sowie einen außerhalb des Körpers angeordneten und axial mit dem Stößel verbundenen Steuerring (50).

2. Schnellanschlußvorrichtung nach Anspruch 1, dadurch gekennzeichnet, daß der Steuerring (50) ergänzend die Funktion eines drehenden Organs zur Einstellung der Durchsatzleistung des unter Druck stehenden Mediums erfüllt, und zwar mittels Kontrolle des Durchlaßquerschnitts eines Lecklanglochs (40) des Körpers.

3. Schnellanschlußvorrichtung nach einem der Ansprüche 1 oder 2, dadurch gekennzeichnet, daß der Stützkragen (35) zwei mit zwei gegenüberliegenden Dichtungen (38, 39) versehene Auflagen definiert, wobei eine zum Abstützen gegen die Mündung (1) des Geräts (2) und die andere zum Zusammenwirken mit dem Steuerring (50 in der Position, in der der Stößel (41) den Strömungsquerschnitt (23) des Körpers öffnet und die Backen (25) verriegelt, dient.

4. Schnellanschlußvorrichtung nach einem der Ansprüche 1 oder 3, dadurch gekennzeichnet, daß der Stützkragen (35) von einer Zwinge (36) gebildet wird, die sich im wesentlichen an der Basis der Backen (25) einklinkt und eine periphäre Außenwand aufweist, die diejenige des Körpers verlängert.

5. Schnellanschlußvorrichtung nach Anspruch 1, dadurch gekennzeichnet, daß die elastisch ausdehnbaren Backen (25) einen Endmantel (30) definieren, der einen periphären Außenansatz (32) aufweist, dessen Durchmesser kleiner ist, als der Innendurchmesser des Kragens (35), und der mittels eines Zwischenmantels (29) mit dem Körper verbunden ist und intern einen kegelstumpfartigen Mantel bildet, dessen kleine Basis einen Durchmesser aufweist, der kleiner ist als der Außendurchmesser des Stößels.

6. Schnellanschlußvorrichtung nach Anspruch 5, dadurch gekennzeichnet, daß der rohrförmige Stößel (41) ein offenes Ende (45) aufweist, das mit dem kegelstumpfförmigen Mantel (29, 30) der Backen zusammenwirkt, sowie ein von einem Verschluß (43) geschlossenes Ende des Durchgangsquerschnitts des Körpers, einen kleineren Außendurchmesser als der Innendurchmesser des Körpers, in dem er eine ringförmige Kammer (60) begrenzt, und einen axialen Durchgang (61) und Langlöcher (44) zwischen der Kammer und dem Durchgang.

7. Schnellanschlußvorrichtung nach einem der Ansprüche 1, 5 oder 6, dadurch gekennzeichnet, daß der Stößel (41) außen radiale Erweiterungen (46) aufweist, die in die Schlitze (26) der Backen eingreifen und eine zylinderförmige Verkleidung (47) tragen, die außen und mit Dichtigkeit auf der Basis (16) des Körpers (7) gleiten.

8. Schnellanschlußvorrichtung nach einem der Ansprüche 1, 5, 6 oder 7, dadurch gekennzeichnet, daß der Stößel (41) an einem Ende einen Verschluß (43) umfaßt, der eine kegelstumpfartige Auflage definiert, die dazu geeignet ist, mit einer Membrandichtung (21) zusammenzuwirken, die zwischen der Grundlinie (16) des Körpers und dem Stutzen (8) festgehalten wird, der mittels Einklinken mit dem Körper verbunden ist.

9. Schnellanschlußvorrichtung nach einem der Ansprüche 1, 2 oder 7, dadurch gekennzeichnet, daß der Steuerring (50) durch Einklinken auf der Verkleidung (36) montiert ist, um eine axiale Verbindung herzustellen, sich jedoch frei mit Dichtigkeit drehen kann.

10. Schnellanschlußvorrichtung nach einem der Ansprüche 1, 5, 6, 7 oder 8, dadurch gekennzeichnet, daß der Stößel am Ende einen periphären Außenwulst (45) aufweist und daß der von den Backen (25) definierte Endmantel (30) eine leichte hinterarbeitete kegelstumpfartige Form ausweist, die derjenigen des Zwischenteils der kleinen Basis gegenüberliegt, von der aus sie sich mittels einer Kante (31) anschließt.
